# EUROPEAN PATENT SPECIFICATION

(11) **EP 0 950 545 B1**
(45) Date of publication and mention of the grant of the patent: **03.12.2003**
(21) Application number: 99200966.2
(22) Date of filing: 26.03.1999
(51) Int. Cl.: B60B 33/00

(54) **A wheel for mobile working platforms, scaffolding and the like**
Rad für mobile Arbeitsbühne, Gerüste und dergleichen
Roue pour plateforme de travail mobile, échafaudages et similaires

(30) Priority: 15.04.1998 IT PD980087
(43) Date of publication of application: 20.10.1999
(73) Proprietor: TELLURE ROTA S.p.A., 41043 Formigine (Modena) (IT)
(72) Inventor: Botti, Giorgio, 41042 Casalgrande (IT)
(74) Representative: Cantaluppi, Stefano

(56) References cited:
- EP-A- 0 606 807
- BE-A- 567 678
- DE-A- 3 426 443
- GB-A- 2 182 554
- US-A- 4 361 930
- US-A- 4 731 900

## Description

The present invention relates to a wheel for mobile working platforms, scaffolding and the like according to the preamble to the main claim.

In the aforementioned field, the wheel generally has a solid cylindrical shank perforated diametrally by a through-hole which has two diameters so as to form, at one end of the hole, a shoulder against which a spring urges a tooth, the tip of the tooth, which has a smaller diameter than the body, normally projecting beyond the outside diameter of the shank in order to interfere with the wall of the tubular seat in which the shank is fitted.

A structure of this type necessarily requires the cylindrical shank of the wheel to be solid, that is, it is not suitable for the construction of a shank with a tubular structure. Solid shanks involve a considerable weight which, as well as causing an increase in material cost, leads to an increase in the costs of processes such as surface-galvanizing treatment. The dual-diameter drilling of the solid element in a diametral direction is also expensive.

For smaller-diameter wheels, it is known to use toroidal cylindrical springs fitted in a cylindrical groove of the shank and interfering by friction with the internal wall of the cylindrical seat in which the shank is housed.

This technology is applied to chair wheels, which are normally small, but cannot be transferred with satisfactory results to wheels for mobile working platforms, particularly larger ones, since the diameter of the wire of the torus of the spring would have to be increased to such an extent as to give rise to serious problems of deformability. In mobile working platforms or scaffolding, however, although, on the one hand, once the wheel has been fitted on one of the tubular legs, it must be restrained with sufficient force to ensure that it is effectively prevented from being lost, on the other hand, it should also be possible to remove the wheel by performing a suitable mechanical operation.

A wheel according to the preamble of claim 1 is known from US-A-4 361 930.

The main task of the invention is to provide a wheel which is designed structurally and functionally to overcome all of the problems complained of with reference to the prior art mentioned. Within the scope of this task, an important object of the invention is to provide a wheel with a light structure which, as a whole, can be processed in a simplified manner and at lower cost than conventional wheels.

This task and these objects are achieved by the invention by means of a wheel formed in accordance with the following claims.

The characteristics and the advantages of the invention will become clearer from the following detailed description of a preferred embodiment thereof, described, by way of non-limiting example, with reference to the appended drawings, in which:

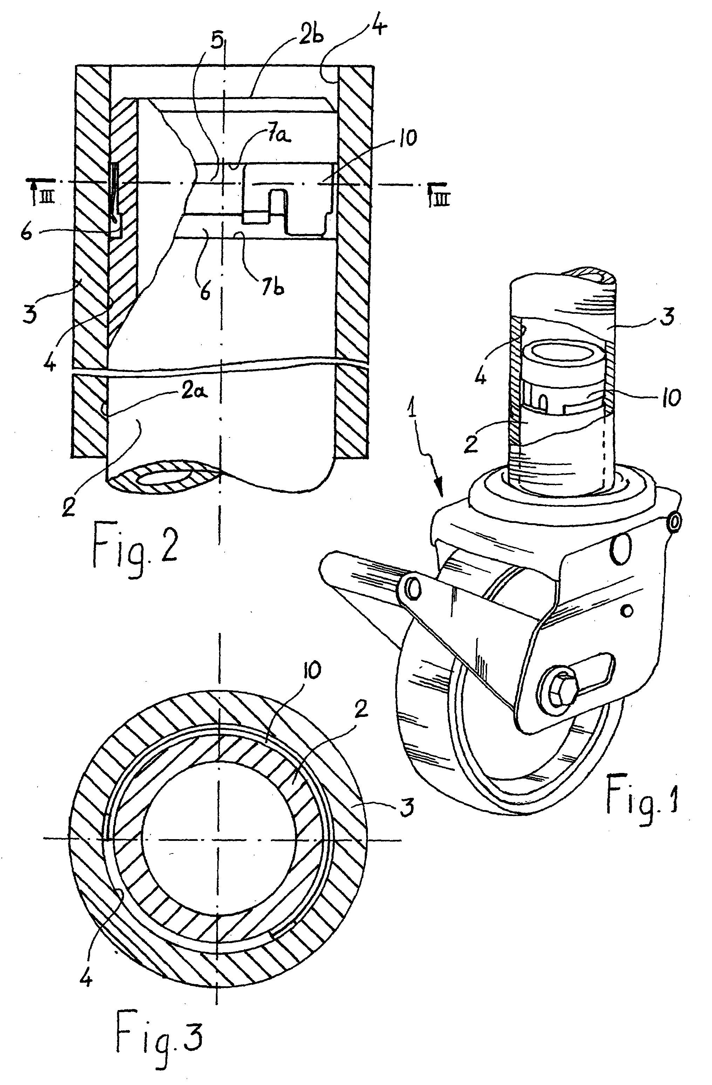

- Figure 1 is a perspective view of a wheel fitted on a leg of a scaffolding or mobile working platform,
- Figure 2 is a partial section showing a detail of Figure 1, on an enlarged scale,
- Figure 3 is a section taken on the line III-III of Figure 2,
- Figure 4 is a perspective view showing a detail of the preceding drawings, from below.

The drawings show a wheel, generally indicated 1, of which a tubular, cylindrical shank 2 with an outer surface 2a and a free end 2b can be seen.

A tubular seat, indicated 3, of a leg or foot of a mobile working platform or scaffolding has an inner cylindrical surface 4 with a diameter just larger than that of the surface 2a, for receiving the shank 2 removably, constituting a seat for the housing thereof.

An annular seat 5 formed peripherally in the outer surface 2a of the shank 2 in the vicinity of the free end 2b has a groove 6 of smaller diameter at its end farthest from the end 2b. Respective shoulders 7a, 7b are defined at the two axially opposite ends of the seat 5.

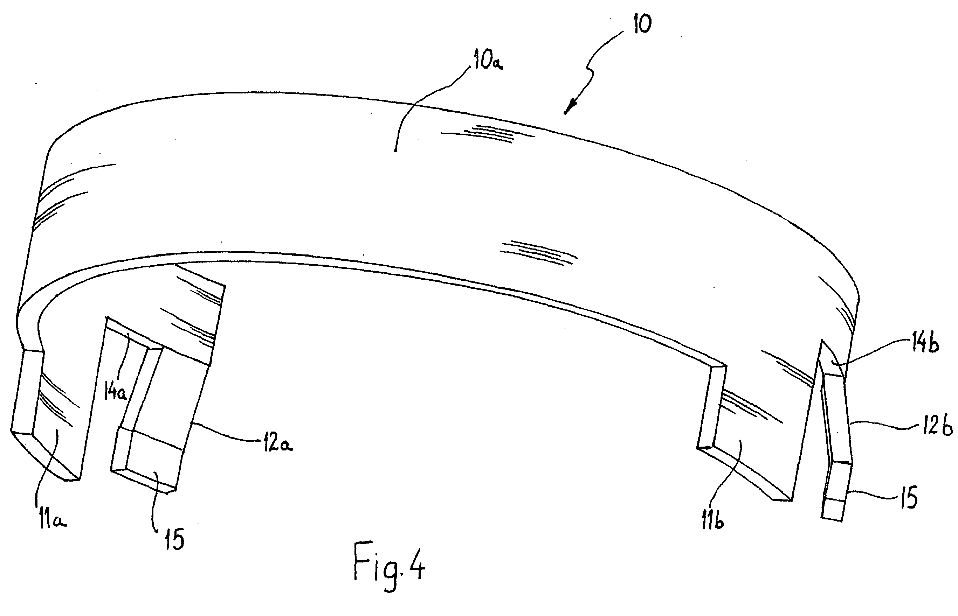

The seat 5 houses a spring 10 with an annular band 10a which is not completely closed onto itself (Figure 4) and which preferably extends through an arc of between approximately 200 and approximately 270 degrees.

The spring 10 includes, in the vicinity of its opposite free ends, two spacer elements 11a, 11b which bring the axial extent of the spring locally to an extent slightly less than the axial extent of the seat 5 between the two shoulders 7a, 7b, so that the spring is restrained on the shank in two directions. Beyond each spacer 11a, 11b, there is an appendage 12a, 12b separated from the respective adjacent spacer by a respective axial cut-out portion 14a, 14b, preferably of a depth such as to reduce the axial width of the band 10a of the spring 10 locally so as to increase the resilience of the respective appendage 12a, 12b.

The appendages 12a, 12b and the spacers 11a, 11b are preferably formed integrally with the spring 10, for example, by blanking from strip.

The opposite ends of the appendages 12a, 12b to the band 10a form respective pads 15 projecting beyond the seat 5 radially relative to the shank in order to interfere resiliently with the inner surface 4 of the seat housing the shank 2 in the mobile working platform. It can be seen that, when the spring is in the rest condition, the pad 15 is oriented approximately parallel to the spring 10, whereas the portion of the appendage which connects the pad 15 to the band 10a is inclined outwardly to a greater extent. As a result of this geometrical arrangement, the force required to remove the shank from its seat in the tubular element of the mobile working platform is approximately twice the force required to insert the shank in the same seat by deforming the spring. Loss of the wheel is thus effectively prevented.

Amongst the main advantages of the wheel according to the invention is that the means for restraining the shank in the tubular seat of the mobile working platform permit the formation of tubular shanks. Moreover, the seat of the spring can easily be machined by turning of the shank, without requiring through-holes.

## Claims

1. A wheel (1) for mobile working platforms, scaffolding and the like, comprising a cylindrical shank (2) which can be housed in a tubular seat (3) of the mobile working platform or scaffolding and means for restraining the shank (2) in the seat (3), the means being mounted on the shank (2) and being urged resiliently against the inner surface (4) of the seat (3) in order to generate sufficient friction and/or clamping to restrain the shank (2) in the seat (3) in the absence of a mechanical removal operation, whereby the restraining means comprise an annular band spring (10) **characterized in that** said annular band spring (10) is restrained axially on the shank (2) and provided with one or more appendages (12a, 12b) each having one end fixed to the band spring (10) and an opposite end projecting radially from the shank in order to interfere resiliently with the inner surface (4) of the seat (3).

2. A wheel according to Claim 1, in which the shank (2) is tubular.

3. A wheel according to Claim 1 or Claim 2, in which an annular seat (5) is formed peripherally on the shank (2) and the annular band spring (10) is nested in the annular seat (5) with the appendages (12a, 12b) projecting from the annular seat (5).

4. A wheel according to Claim 3, in which the annular seat (5), is formed by turning of the shank (2).

5. A wheel according to one or more of the preceding claims, in which the band (10a) of the spring (10) is not completely closed onto itself.

6. A wheel according to one or more of the preceding claims, in which the appendages (12a, 12b) are formed integrally with the band (10a) of the spring (10).

7. A wheel according to one or more of the preceding claims in which the appendages (12a, 12b) on opposite sides of the band are formed with pads (15) with a profile such that, when the spring is substantially undeformed, the pad (15) is substantially parallel to the band (10a) of the spring (10).

8. A wheel according to one or more of the preceding claims in which, in the vicinity of each appendage (12a, 12b) of the spring (10), there is a respective spacer (11a, 11b) extending axially from the band spring (10) so that, in the region of the spacer (11a, 11b) the band (10a) has approximately the same axial length as the annular seat in order to restrain the spring on the shank in two directions.

9. A wheel according to one or more of the preceding claims, in which a groove (6) is formed in the annular seat (5) in the region of the free ends of the appendages (12a, 12b) to allow the appendages (12a, 12b) to contract resiliently radially relative to the shank (2).

10. A wheel according to Claim 8, in which respective cut-out portions (14a, 14b) are provided in the spring (10) between the appendages (12a, 12b) and the adjacent spacer (11a, 11b).

## Patentansprüche

1. Rad (1) für mobile Arbeitsbühnen, Baugerüste und dergleichen mit einem zylinderförmigen Schaft (2), der in einem rohrförmigen Sitz (3) der mobilen Arbeitsbühne oder des Baugerüsts untergebracht werden kann, und Rückhalteeinrichtung für den Schaft (2) im Sitz (3), wobei die Einrichtung am Schaft (2) montiert und elastisch federnd gegen die Innenfläche (4) des Sitzes (3) gedrückt wird, so dass genügend Reibung bzw. Spannung oder Klammerung erzeugt wird, um den Schaft (2) im Sitz (3) ohne mechanische Demontage zurückzuhalten, und die Rückhalteeinrichtung eine ringförmige Bandfeder (10) besitzt, **dadurch gekennzeichnet, dass** die genannte, ringförmige Bandfeder (10) axial am Schaft (2) eingespannt ist und mit einem oder mehreren Anhängen (12a, 12b) versehen ist, wobei jeweils ein Ende an der Bandfeder (10) befestigt ist und das gegenüberliegende Ende radial von dem Schaft übersteht, so dass es federnd in die Innenfläche des Sitzes (3) eingreift.

2. Rad nach Anspruch 1, wobei der Schaft (2) rohrförmig ist.

3. Rad nach Anspruch 1 oder 2, wobei ein ringförmiger Sitz (5) am Umfang des Schaftes (2) gebildet wird, und die ringförmige Bandfeder (10) in den ringförmigen Sitz (5) eingreift, wobei die Anhänge (12a und 12b) von dem ringförmigen Sitz (5) vorstehen.

4. Rad nach Anspruch 3, wobei der ringförmige Sitz (5) durch Drehen des Schaftes (2) gebildet wird.

5. Rad nach einem oder mehreren der vorhergehenden Ansprüche, wobei das Band (10a) der Feder (10) nicht vollständig in sich geschlossen ist.

6. Rad nach einem oder mehreren der vorhergehenden Ansprüche, wobei die Anhänge (12a und 12b) zusammen mit dem Band (10a) der Feder (10) gebildet werden.

7. Rad nach einem oder mehreren der vorhergehenden Ansprüche, wobei die Anhänge (12a, 12b) an den gegenüberliegenden Seiten des Bandes mit Stoßfängern (15) mit Profil gebildet sind, so dass der Stoßfänger (15) im wesentlichen parallel zu dem Band (10a) der Feder (10) verläuft, wenn die Feder im wesentlichen nicht verformt ist.

8. Rad nach einem oder mehreren der vorhergehenden Ansprüche, wobei sich in der Nähe jedes Anhangs (12a, 12b) der Feder (10) jeweils ein Abstandhalter (11a, 11b) befindet, der axial vom Band der Feder (10) aus verläuft, so dass das Band im Bereich des Abstandhalters (11a, 11b) ungefähr die gleiche Axiallänge wie der ringförmige Sitz besitzt, um die Feder an dem Schaft in zwei Richtungen zurückzuhalten.

9. Rad nach einem oder mehreren der vorhergehenden Ansprüche, wobei im Bereich der freien Enden der Anhänge (12a, 12b) eine Nut (6) im ringförmigen Sitz (5) gebildet wird, so dass sich die Anhänge (12a, 12b) in Bezug auf den Schaft (2) radial elastisch zusammenziehen können.

10. Rad nach Anspruch 8, wobei sich in der Feder zwischen den Anhängen (12a, 12b) und dem angrenzenden Abstandhalten (11a, 11b) jeweils Aussparungen (14a, 14b) befinden.

## Revendications

1. Roue (1 ) pour des plates-formes de travail mobiles, échafaudages et analogues, comprenant un fût cylindrique (2) qui peut être logé dans un siège tubulaire (3) de la plate-forme de travail mobile ou de l'échafaudage et des moyens pour retenir le fût (2) dans le siège (3), les moyens étant montés sur le fût (2) et étant sollicités élastiquement contre la surface interne (4) du siège (3), de façon à engendrer un frottement et/ou serrage suffisant pour retenir le fût (2) dans le siège (3) en l'absence d'une opération de dépose mécanique, les moyens de retenue comprenant un ressort à bande annulaire (10),
**caractérisée en ce que** ledit ressort à bande annulaire (10) est retenu axialement sur le fût (2) et est muni d'un ou de plusieurs appendices (12a, 12b), chacun ayant une extrémité fixée au ressort à bande (10) et une extrémité opposée faisant saillie radialement du fût de façon à interférer élastiquement avec la surface interne (4) du siège (3).

2. Roue selon la revendication 1, dans laquelle le fût (2) est tubulaire.

3. Roue selon la revendication 1 ou la revendication 2, dans laquelle un siège annulaire (5) est formé périphériquement sur le fût (2) et le ressort à bande annulaire (10) est imbriqué dans le siège annulaire (5) avec les appendices (12a, 12b) faisant saillie du siège annulaire (5).

4. Roue selon la revendication 3, dans laquelle le siège annulaire (5) est formé par tournage du fût (2).

5. Roue selon l'une ou plusieurs des revendications précédentes, dans laquelle la bande (10a) du ressort (10) n'est pas complètement fermée sur elle-même.

6. Roue selon l'une ou plusieurs des revendications précédentes, dans laquelle les appendices (12a, 12b) sont formés intégralement avec la bande (10a) du ressort (10).

7. Roue selon l'une ou plusieurs des revendications précédentes, dans laquelle les appendices (12a, 12b) sur des côtés opposés de la bande sont formés avec des pattes (15) ayant un profil tel que, quand le ressort est sensiblement non déformé, la patte (15) est sensiblement parallèle à la bande (10a) du ressort (10).

8. Roue selon l'une ou plusieurs des revendications précédentes, dans laquelle, au voisinage de chaque appendice (12a, 12b) du ressort (10), il existe un élément d'écartement respectif (11a, 11b) s'étendant axialement du ressort à bande (10) de sorte que, dans la région de l'élément d'écartement (11a, 11b), la bande (10a) présente approximativement la même longueur axiale que le siège annulaire de façon à retenir le ressort sur le fût dans deux directions.

9. Roue selon l'une ou plusieurs des revendications précédentes, dans laquelle une gorge (6) est réalisée dans le siège annulaire (5) dans la région des extrémités libres des appendices (12a, 12b) pour permettre aux appendices (12a, 12b) de se contracter élastiquement radialement par rapport au fût (2).

10. Roue selon la revendication 8, dans laquelle des parties découpées respectives (14a, 14b) sont prévues dans le ressort (10) entre les appendices (12a, 12b) et l'élément d'écartement adjacent (11a, 11b).
